# EUROPÄISCHE PATENTSCHRIFT

(11) **EP 1 260 795 B1**
(45) Veröffentlichungstag und Bekanntmachung des Hinweises auf die Patenterteilung: **14.04.2010**
(21) Anmeldenummer: 02011384.1
(22) Anmeldetag: 23.05.2002
(51) Int. Cl.: G01D 5/245

(54) **Verfahren und Schaltungsanordnung zur Auswertung von Impulsfolgen eines Sensors**
Method and apparatus for evaluating output pulse trains of a sensor
Méthode et appareil pour évaluer des impulsions de sortie d'un capteur

(30) Priorität: 25.05.2001 DE 10125604
(43) Veröffentlichungstag der Anmeldung: 27.11.2002
(73) Patentinhaber: SIEMENS AKTIENGESELLSCHAFT, 80333 München (DE)
(72) Erfinder: Kälin, Claus, 76351 Linkenheim-Hochstetten (DE)

(56) Entgegenhaltungen:
- JP-A- 9 101 176
- US-A- 5 841 301
- PATENT ABSTRACTS OF JAPAN Bd. 1996, Nr. 12, 26. Dezember 1996 (1996-12-26) & JP 08 210875 A (MITSUBISHI ELECTRIC CORP; MITSUBISHI DENKI SEMICONDUCTOR SOFTWARE KK), 20. August 1996 (1996-08-20)
- PATENT ABSTRACTS OF JAPAN Bd. 1997, Nr. 12, 25. Dezember 1997 (1997-12-25) & JP 09 210729 A (MITSUBISHI ELECTRIC CORP), 15. August 1997 (1997-08-15)
- PATENT ABSTRACTS OF JAPAN Bd. 1995, Nr. 08, 29. September 1995 (1995-09-29) & JP 07 126089 A (TOKAI CARBON CO LTD), 16. Mai 1995 (1995-05-16)
- PATENT ABSTRACTS OF JAPAN Bd. 1997, Nr. 04, 30. April 1997 (1997-04-30) & JP 08 327396 A (SONY MAGNESCALE INC), 13. Dezember 1996 (1996-12-13)

## Beschreibung

Verfahren und Schaltungsanordnung zur Auswertung von Impulsfolgen, die ein Messsignal für physikalische Größen darstellen

Die Erfindung betrifft ein Verfahren und eine Schaltungsanordnung zur Auswertung von Impulsfolgen als Messsignal für physikalische Größen, insbesondere für dimensionsbehaftete Messwerte wie z. B. Periodendauer, Frequenz oder Drehzahl einer mechanischen Anordnung, nach dem Oberbegriff des Hauptanspruchs.

Beispielsweise ist aus der EP 0 449 037 A1 eine Messanordnung bekannt, mit der die Drehzahl und/oder die Drehstellung einer Scheibe inkremental über die Auswertung von mit entsprechenden Sensoren erzeugten Impulsfolgen erfasst werden kann. Bei diesem Erfassen, Auswerten und Anzeigen der Impulsfolgen bzw. der Gebersignale als dimensionsbehafteten Messwert über einen großen Wertebereich hinweg, sollte der Messwert immer so schnell wie möglich aktualisiert werden, ohne dass von außen beim Messvorgang Integrationszeiten oder Messbereiche geändert werden müssen, wenn die Messgröße einen größeren Wertebereich durchläuft.

Bei bisherigen, in diesem Zusammenhang gewählten Lösungen hängen der Messbereich und die Aktualisierungszeit des Messwerts beispielsweise direkt von der gewählten Integrationszeit ab. Der Messwert wird hierbei äquidistant nach dem Ablauf der Integrationszeit aktualisiert und es ergibt sich nur ein Messwert ungleich Null, wenn mindestens zwei Impulse während der Integrationszeit erfasst werden. Die untere Messbereichsgrenze ist dann dadurch definiert, dass der Abstand der Impulse immer kleiner ist als die Integrationszeit. Vergrößert sich der zeitliche Abstand zwischen den Impulsen, so muss jedoch die Integrationszeit vergrößert werden, wodurch sich dann auch die Aktualisierungszeit verlängert. Soll hingegen auch bei schnellen Impulsfolgen die Aktualisierungszeit relativ klein bleiben, so müsste auch die Integrationszeit verkleinert und damit die untere Messbereichsgrenze angehoben werden. Damit der Anwender jedoch im ganzen Messbereich einen Messwert erhält, muss, wenn sich der Abstand zwischen den Impulsen verlängert, im Betrieb die Integrationszeit rechtzeitig verlängert werden, was einen relativ großen Aufwand erfordert.

Der Erfindung liegt daher die Aufgabe zugrunde, ein Verfahren und eine Schaltungsanordnung zur Auswertung von Impulsfolgen, die ein Messsignal für physikalische Größen darstellen, dadurch fortzubilden, dass mit einfachen Mitteln auch in größeren Messbereichen für das Messsignal jeweils schnell aktualisierte Messungen durchgeführt werden können.

Gemäß der Erfindung ist ein Verfahren und eine Schaltungsanordnung zur Auswertung von Impulsfolgen der eingangs genannten Art, bei dem die Impulse in einem Impulszähler zur Erfassung der physikalischen Größe ausgewertet werden und jeweils nach einer Zeitspanne aktualisiert werden, in vorteilhafter Weise dadurch weitergebildet, dass die Zeitspanne durch einen Bereich definiert ist, der von einer minimalen Integrations- oder Aktualisierungszeit zu einer maximalen Integrations- oder Aktualisierungszeit reicht. Für den Fall, dass der Abstand zwischen den Impulsen größer ist als die minimale Integrations- oder Aktualisierungszeit und kleiner/gleich der maximalen Integrations- oder Aktualisierungszeit, erfolgt ein Berechnen des aktuellen Messwertes beim Eintreffen eines neuen Impulses. Für den Fall, dass der Abstand zwischen den Impulsen kleiner ist als die minimale Integrations- oder Aktualisierungszeit, erfolgt gemäß der Erfindung jedoch ein Berechnen des aktuellen Messwertes jeweils nach dem Ablauf der minimalen Integrations- oder Aktualisierungszeit.

Die JP-A-408210875 offenbart eine Schaltungsanordnung, die nur Impulse mit einem zeitlichen Abstand zwischen einem minimalen Wert und einem maximalen Wert, für eine Messwertbildung zulässt.

Nach einer vorteilhaften Ausführungsform des erfindungsgemäßen Verfahrens kann für den Fall, dass der Abstand zwischen den Impulsen kleiner ist als die minimale Integrationsoder Aktualisierungszeit, jedoch größer ist als die Hälfte der minimalen Integrations- oder Aktualisierungszeit, auf einfache Weise der neue Messwert berechnet werden. Bei einem noch kleineren Abstand kann dann ein Berechnen eines gemittelten Messwertes nach dem Ablauf der minimalen Integrationsoder Aktualisierungszeit durchgeführt werden.

Mit dem erfindungsgemäßen Verfahren kann somit auf eine flexible, von außen änderbare Integrations- oder Aktualisierungszeit in vorteilhafter Weise verzichtet werden. Dieses wird durch eine fest implementierte maximale Integrationsoder Aktualisierungszeit zum Erkennen der Null am unteren Ende des Wertebereichs und einer minimalen Integrations- oder Aktualisierungszeit am oberen Ende des technisch sinnvollen Wertebereichs ermöglicht. Dabei ist jedoch auch eine angepasste Verlängerung der minimalen Integrations- oder Aktualisierungszeit beispielsweise durch eine Parametrierung nach wie vor möglich.

Das erfindungsgemäße Messverfahren kann also vier Bereiche aufweisen. Im ersten Bereich ist der Abstand zwischen den Impulsen größer als die maximale Integrations- oder Aktualisierungszeit; der Messwert ist dann Null. Im zweiten Bereich ist der Abstand zwischen den Impulsen größer als die minimale Integrations- oder Aktualisierungszeit, aber kleiner oder gleich der maximalen; es wird somit ein Befehl zum Berechnen und Ausgeben eines Messwertes beim Eintreffen eines neuen Impulses erteilt. Im dritten Bereich ist der Abstand zwischen den Impulsen zwar kleiner/gleich als die minimale Integrations- oder Aktualisierungszeit, jedoch größer als die Hälfte der minimalen Integrations- oder Aktualisierungszeit; es wird nach dem Ablauf der minimalen Integrations- oder Aktualisierungszeit das Berechnen und Ausgeben des Messwertes durchgeführt. Im vierten Bereich ist der Abstand zwischen den Impulsen sehr viel kleiner als die minimale Integrationsoder Aktualisierungszeit; es erfolgt ein Berechnen und Ausgeben eines gemittelten Messwertes nach Ablauf der minimalen Integrations- oder Aktualisierungszeit.

Das erfindungsgemäße Verfahren kann dadurch vorteilhaft ausgestaltet werden, dass die maximale und minimale Integrations- oder Aktualisierungszeit ein ganzzahliges Vielfaches der Integrations- oder Aktualisierungszeit ist. Auch sind entsprechende Software- oder Firmware-Bausteine zur Durchführung des Verfahrens einfach anwendbar. Es kann dazu in dem Software- oder Firmware-Baustein ein Programm hinterlegt sein, dessen Programmschritte die Auswertung der innerhalb der Grenzen der zuvor beschriebenen Integrations- oder Aktualisierungszeiten erfassten Impulsfolgen und die Anzeige der errechneten Messwerte durchführen.

Eine vorteilhafte Durchführung des zuvor beschriebenen Verfahrens kann mit einer Schaltungsanordnung erfolgen, die einen programmierbaren Mikroprozessor aufweist. Dieser wird an seinem Dateneingang mit den aus einem interruptgesteuerten Latch- oder Speicherregister auslesbaren Impulszählerwerten für die Impulsfolgen und mit den aus einem weiteren interruptgesteuerten Latch- oder Speicherregister auslesbaren Zeittaktzählerwerten eines externen Zeittaktes versorgt. Zur Berechnung der Messwerte wird der Mikroprozessor weiterhin mit einem Interrupt für die Zählimpulsfolgen und für die Integrations- oder Aktualisierungszeit beaufschlagt.

Nach einer konkreten Ausführungsform ist in der Schaltungsanordnung ein Impuls- und ein Zeittaktzähler mit einer vorgegebenen Bitbreite (z. B. 32 Bit) vorhanden, deren Zählwerte jeweils im angeschlossenen Latch- oder Speicherregister bei jedem eintreffenden Zählimpuls ablegbar sind. Weiterhin ist ein Zählinterruptgeber vorhanden, der die Latch- oder Speicherregister und den Mikroprozessor derart steuert, dass ein Interrupt mit jedem Zählimpuls erzeugt wird und dem Mikroprozessor gemeldet wird, wann ein neues Messwertepaar, bestehend aus einer Impulszahl des ersten Latch- oder Speicherregisters und dem Zeitstempel des zweiten Latch- oder Speicherregisters, abgelegt ist.

Zusammenfassend ist also festzustellen, dass der Anwender des erfindungsgemäßen Verfahrens oder der Schaltungsanordnung in vorteilhafter Weise einen dimensionsbehafteten Messwert über einen ganzen benötigten Messbereich so schnell als möglich erhält, ohne dass er im Betrieb in den Messvorgang eingreifen muss.

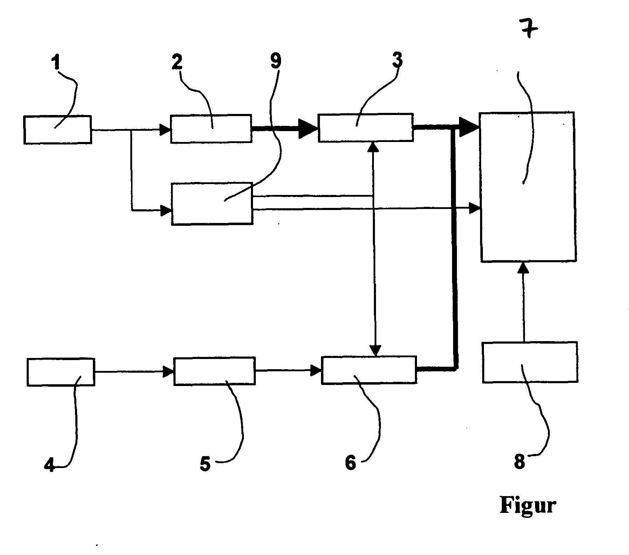

Die Erfindung wird anhand des in der einzigen Figur der Zeichnung dargestellten Ausführungsbeispiels einer Schaltungsanordnung für die Ausführung eines Verfahrens zur Auswertung von Impulsfolgen, die ein Messsignal für physikalische Größen darstellen, erläutert.

In der Figur ist eine Schaltungsanordnung gezeigt, mit der eine Zählimpulsfolge, beispielsweise eines Sensors 1 an einem Drehzahlgeber oder dergleichen, in einem Impulszähler 2, z. B. mit einer Bitbreite von 32 Bit, gezählt und währenddessen mit jedem eintreffenden Zählimpuls in einem Latchregister 3 abgelegt wird. Ein Zeittaktgeber 4 und ein Zeittaktzähler 5 erzeugen einen so genannten Zeitstempel, der in einem weiteren Latchregister 6 bei jedem Zählimpuls abgelegt wird. Die Datenausgänge der beiden Latchregister 3 und 6 sind auf den Dateneingang eines Mikroprozessors 7 geführt.

Weiterhin ist ein Timer 8 für die Bildung einer Integrations- oder Aktualisierungszeit hinsichtlich der Erneuerung der Messwerte in der vorgeschlagenen Schaltungsordnung vorhanden, der einen entsprechenden Timerinterrupteingang des Mikroprozessors 7 ansteuert. Die Interruptsteuerung bezüglich der Zählimpulse wird mit einem von den Zählimpulsen des Sensors 1 gesteuerten Interruptgeber 9 vorgenommen, der die Latchregister 3 und 6 mit einem Latch- oder Speichersignal und den Mikroprozessor 7 mit einem Zählimpulsinterruptsignal versorgt.

Mit dem Interruptgeber 9 wird bei jedem Zählimpuls des Sensors 1 dem Mikroprozessor 7 gemeldet, dass ein neues Wertepaar, bestehend aus der Impulszahl und dem Zeitstempel, in den beiden Latchregistern 3 und 6 hinterlegt worden ist, so dass die Zählimpulsmeldung gesetzt werden kann.

Der Interrupt des Timers 8 erreicht den Mikroprozessor 7 in festen Zeitabständen IT, welche von einer minimalen Integrations- oder Aktualisierungszeit ITₘᵢₙ zu einer maximalen Integrations- oder Aktualisierungszeit ITₘₐₓ reichen, wobei die beiden Zeiten ITₘᵢₙ und ITₘₐₓ ganzzahlige Vielfache dieses Zeitabstandes IT sind. Nach dem Start des Messens werden die Zeitabstände in einem Aktualisierungszeitzähler des Mikroprozessors 7 aufaddiert zu einer Zeit IT, welche am Ende eines Messvorgangs wieder zurückgesetzt wird.

Wird nun innerhalb einer Zeit IT entsprechend. ITₘᵢₙ mindestens ein Zählimpuls per Zählimpuls-Interrupt gemeldet, dann erfolgt im Mikroprozessor 7 nach dem Ablauf von ITₘᵢₙ ein Aufrufen der Routine zum Berechnen und Ausgeben des neuen Messwertes, zum Rücksetzen des Aktualisierungszeitzählers und zum Löschen der Zählimpulsmeldung.

Wird in einer Zeit IT zwischen ITₘᵢₙ und ITₘₐₓ ein Zählimpuls per Interrupt gemeldet, dann erfolgt hier sofort das Aufrufen der Routine zum Berechnen und Ausgeben des neuen Messwertes, zum Rücksetzen des Aktualisierungszeitzählers und für den Fall, dass die Zeit IT unter ITₘₐₓ liegt, auch zum Löschen der Zählimpulsmeldung.

Beim Start eines Messvorgangs werden die Startwerte des Impulszählers 2 und des Zeittaktzählers 5 in die Latchregister 3 bzw. 6 eingelesen und in so genannte Vergleichswertvariablen übernommen. Bei jedem Aufruf der zuvor beschriebenen Berechnungsroutine im Mikroprozessor 7 werden die Latchregister 3 und 6 ausgelesen und in Aktualwertvariable übernommen. Danach werden die Differenzen jeweils zwischen dem Aktualwert und den Vergleichswerten der Zählimpulse und des Zeittaktes gebildet. Ist die Impulsdifferenz Null, so wird der Messwert Null ausgegeben; wenn die Impulsdifferenz größer Null ist, kann je nach dem im Mikroprozessor 7 implementierten Algorithmus z. B. eine Periodendauer, eine Frequenz oder eine Drehzahl berechnet und ausgegeben werden, wobei diese Aktualwerte dann wieder als Vergleichswerte übernommen werden.

## Patentansprüche

1. Verfahren zur Auswertung von Impulsfolgen, die ein Messsignal für physikalische Größen darstellen, bei dem die Impulse in einem Impulszähler zur Erfassung der physikalischen Größe ausgewertet werden und jeweils nach einer Zeitspanne aktualisiert werden, **dadurch gekennzeichnet, dass** die Zeitspanne durch einen Bereich definiert ist, der von einer minimalen Integrations- oder Aktualisierungszeit zu einer maximalen Integrations- oder Aktualisierungszeit reicht, und dass für den Fall, dass der zeitliche Abstand zwischen den Impulsen größer ist als die minimale Integrations- oder Aktualisierungszeit und kleiner/gleich der maximalen Integrations- oder Aktualisierungszeit, ein Berechnen des aktuellen Messwertes beim Eintreffen eines neuen Impulses erfolgt und dass für den Fall, dass der zeitliche Abstand zwischen den Impulsen kleiner ist als die minimale Integrations- oder Aktualisierungszeit, ein Berechnen des aktuellen Messwertes nach dem Ablauf der minimalen Integrations- oder Aktualisierungszeit erfolgt.

2. Verfahren nach Anspruch 1, **dadurch gekennzeichnet, dass** für den Fall, dass der zeitliche Abstand zwischen den Impulsen kleiner ist als die minimale Integrations- oder Aktualisierungszeit, ein Berechnen eines gemittelten Messwertes nach dem Ablauf der minimalen Integrations- oder Aktualisierungszeit erfolgt.

3. Verfahren nach Anspruch 2, **dadurch gekennzeichnet, dass** für den Fall, dass der zeitliche Abstand zwischen den Impulsen kleiner oder gleich ist als die minimale Integrations- oder Aktualisierungszeit, jedoch größer ist als die Hälfte der minimalen Integrations- oder Aktualisierungszeit, ein Berechnen des aktuellen Messwertes nach dem Ablauf der minimalen Integrations- oder Aktualisierungszeit erfolgt und dass bei einem noch kleineren zeitlichen Abstand zwischen den Impulsen ein Berechnen eines gemittelten Messwertes nach dem Ablauf der minimalen Integrations- oder Aktualisierungszeit erfolgt.

4. Verfahren nach einem der vorhergehenden Ansprüche, **dadurch gekennzeichnet, dass** die maximale Integrations- oder Aktualisierungszeit und die minimale Integrations- oder Aktualisierungszeit jeweils ganzzahlige Vielfache eines vorgegebenen Zeitabstandes sind, der durch einen Interrupt eines Timers (8) gesteuert wird.

5. Software- oder Firmware-Baustein zur Durchführung des Verfahrens nach einem der vorhergehenden Ansprüche, **dadurch gekennzeichnet, dass** in dem Software- oder Firmware-Baustein ein Programm hinterlegt ist, dessen Programmschritte in von einem Timer (8) gesteuerten Zeitabständen die Auswertung der innerhalb der Grenzen der von Vielfachen der Zeitabstände gebildeten Integrations- oder Aktualisierungszeit erfassten Impulsfolgen und die Anzeige der errechneten Messwerte durchführen.

6. Schaltungsanordnung zur Durchführung eines Verfahrens oder zum Betrieb mit einem Software- oder Firmware-Baustein nach einem der vorhergehenden Ansprüche, **dadurch gekennzeichnet, dass** ein programmierbarer Mikroprozessor (7) vorhanden ist, der an seinem Dateneingang mit den aus einem Latch- oder Speicherregister (3) auslesbaren Impulszählerwerten für die Impulsfolgen und mit den aus einem weiteren Latch- oder Speicherregister (6) auslesbaren Zeitzählerwerten eines externen Zeittaktes beaufschlagbar ist, und dass der Mikroprozessor (7) mit einem Interrupt für die Zählimpulsfolgen und für die Bildung der Integrations- oder Aktualisierungszeit mit dem Timer (8) versorgt ist.

7. Schaltungsanordnung nach Anspruch 6, **dadurch gekennzeichnet, dass** Impuls- und Zeittaktzähler (2, 5) mit einer vorgegebenen Bitbreite vorhanden sind, deren Zählwerte jeweils im angeschlossenen Latch- oder Speicherregister (3, 6) mit jedem Zählimpuls ablegbar sind, und dass ein Interruptgeber (9) vorhanden ist, der die Latch- oder Speicherregister (3, 6) und den Mikroprozessor (7) derart steuert, dass ein Interrupt mit jedem Zählimpuls erzeugt wird und dem Mikroprozessor (7) gemeldet wird, wenn ein neues Messwertepaar, bestehend aus einer Impulszahl des ersten Latch- oder Speicherregisters (3) und dem Zeitstempel des zweiten Latch- oder Speicherregisters (6), abgelegt ist.

## Claims

1. Method for evaluating pulse sequences which represent a measurement signal for physical quantities, in which the pulses are evaluated in a pulse counter for detecting the physical quantity and are in each case updated after a time interval, **characterized in that** the time interval is defined by a range which extends from a minimum integration or updating time to a maximum integration or updating time, and that, in the case where the interval between the pulses is greater than a minimum integration or updating time and smaller than/equal to the maximum integration or updating time, the current measurement value is calculated when a new pulse arrives, and that, in the case where the interval between the pulses is smaller than the minimum integration or updating time, the current measurement value is calculated after the minimum integration or updating time has elapsed.

2. Method according to Claim 1, **characterized in that**, in the case where the interval between the pulses is smaller than the minimum integration or updating time, an averaged measurement value is calculated after the minimum integration or updating time has elapsed.

3. Method according to Claim 2, **characterized in that**, in the case where the interval between the pulses is smaller than or equal to the minimum integration or updating time but greater than one half of the minimum integration or updating time, the current measurement value is calculated after the minimum integration or updating time has elapsed, and that in the case of an even smaller interval between the pulses, an averaged measurement value is calculated after the minimum integration or updating time has elapsed.

4. Method according to one of the preceding claims, **characterized in that** the maximum integration or updating time and the minimum integration or updating time are in each case integral multiples of a predetermined interval, which is controlled by an interrupt of a timer (8).

5. Software or firmware module for carrying out the method according to one of the preceding claims, **characterized in that** in the software or firmware module, a program is stored, the program steps of which carry out, in intervals controlled by a timer (8), the evaluation of the pulse sequences detected within the limits of the integration or updating time formed by the multiples of the intervals and the displaying of the calculated measurement values.

6. Circuit arrangement for carrying out a method or for operating with a software or firmware module according to one of the preceding claims, **characterized in that** a programmable microprocessor (7) is present which is supplied at its data input with the pulse counter values, which can be read out of a latch or storage register (3), for the pulse sequences and with the time counter values, which can be read out of a further latch or storage register (6), of an external clock, and **in that** the microprocessor (7) is supplied with an interrupt for the counting pulse sequences and for the formation of the integration or updating time with the timer (8).

7. Circuit arrangement according to Claim 6, **characterized in that** pulse and clock counters (2, 5) with a predetermined bit width are present, the counts of which can be stored in each case in the connected latch or storage register (3, 6) with each counting pulse and that an interrupt generator (9) is present which controls the latch or storage registers (3, 6) and the microprocessor (7) in such a manner that an interrupt is generated with each counting pulse and reported to the microprocessor (7) when a new pair of measurement values consisting of a pulse number of the first latch or storage register (3) and the time stamp of the second latch or storage register (6) is stored.

## Revendications

1. Procédé d'exploitation de trains d'impulsions, qui représentent un signal de mesure de grandeurs physiques, dans lequel on exploite les impulsions dans un compteur d'impulsions pour la détection des grandeurs physiques et on les met à jour respectivement après un laps de temps, **caractérisé en ce qu'**on définit le laps de temps par une plage, qui va d'un temps d'intégration ou de mise à jour minimum à un temps d'intégration ou de mise à jour maximum, et **en ce que**, dans le cas où la distance dans le temps entre des impulsions est plus grande que la durée d'intégration minimum ou la durée de mise à jour minimum et inférieure ou égale au temps d'intégration maximum ou au temps de mise à jour maximum, on effectue un calcul de la valeur de mesure instantanée lors de l'arrivée d'une impulsion nouvelle, et **en ce que**, dans le cas où la distance dans le temps entre les impulsions est plus petite que le temps d'intégration minimum ou le temps de mise à jour minimum, on effectue un calcul de la valeur de mesure instantanée après que la durée d'intégration minimum ou la durée de mise à jour minimum s'est écoulée.

2. Procédé suivant la revendication 1, **caractérisé en ce que**, dans le cas où la distance dans le temps entre les impulsions est plus petite que la durée d'intégration minimum ou que la durée de mise à jour minimum, on effectue un calcul d'une valeur de mesure moyenne après que la durée d'intégration minimum ou que la durée de mise à jour minimum s'est écoulée.

3. Procédé suivant la revendication 2, **caractérisé en ce que**, dans le cas où la distance dans le temps entre les impulsions est inférieure ou égale à la durée d'intégration minimum ou à la durée de mise à jour minimum, mais toutefois plus grande que la moitié de la durée d'intégration minimum ou de la durée de mise à jour minimum, on effectue un calcul de la valeur de mesure instantanée après que la durée d'intégration minimum ou que la durée de mise à jour minimum s'est écoulée et **en ce que**, si la distance dans le temps entre des impulsions est encore trop petite, on effectue un calcul d'une valeur de mesure moyenne après que la durée d'intégration minimum ou que la durée de mise à jour minimum s'est écoulée.

4. Procédé suivant l'une des revendications précédentes, **caractérisé en ce que** la durée d'intégration maximum ou la durée de mise à jour maximum et la durée d'intégration minimum ou la durée de mise à jour minimum sont respectivement des multiples en nombre entier d'une distance dans le temps prescrite, qui est commandée par une interruption d'un timer.

5. Module de logiciel ou module de micrologiciel pour la mise en oeuvre du procédé suivant l'une des revendications précédentes, **caractérisé en ce que**, dans le module de logiciel ou dans le module de micrologiciel, est mémorisé un programme dont les stades effectuent, à des distances dans le temps réglées par un timer, l'exploitation des trains d'impulsions détectés dans les limites du temps d'intégration ou du temps de mise à jour formées par des multiples des distances dans le temps et l'indication des valeurs de mesure calculées.

6. Montage pour la mise en oeuvre d'un procédé ou pour le fonctionnement avec un module de logiciel ou avec un module de micrologiciel suivant l'une des revendications précédentes, **caractérisé en ce qu'**il est prévu un microprocesseur ( 7 ) programmable, qui peut être alimenté en les valeurs de compteur d'impulsions, qui peuvent être lues dans un registre ( 3 ) à verrouillage ou dans un registre ( 3 ) de mémoire et en les valeurs de compteur de temps d'une horloge externe, qui peuvent être lues dans un autre registre ( 6 ) à verrouillage ou un autre registre de mémoire et **en ce que** le microprocesseur ( 7 ) est alimenté par le timer ( 8 ) en une interruption des trains d'impulsions de comptage et de la formation de la durée d'intégration ou de la durée de mise à jour.

7. Montage suivant la revendication 6, **caractérisé en ce que** des compteurs ( 2, 5 ) d'impulsions et de cadences d'horloge ayant une largeur de bit prescrite sont présents, compteurs dont les décomptes peuvent être enregistrés par chaque impulsion de comptage respectivement dans le registre ( 3, 6 ) à verrouillage ou de mémoire raccordé et **en ce qu'**un indicateur ( 9 ) d'interruption est présent, indicateur qui commande le registre ( 3, 6 ) à verrouillage ou de mémoire et le microprocesseur ( 7 ) de façon à produire une interruption à chaque impulsion de comptage et à indiquer au microprocesseur ( 7 ) si une nouvelle paire de valeurs de mesure, constituée d'un nombre d'impulsions du premier registre ( 3 ) à verrouillage ou de mémoire et de l'horodatage du deuxième registre ( 6 ) à verrouillage ou de mémoire, est enregistrée.
